# EUROPEAN PATENT APPLICATION

(11) **EP 3 547 232 A1**
(43) Date of publication of application: **02.10.2019**
(21) Application number: 19164024.2
(22) Date of filing: 20.03.2019
(51) Int. Cl.: G06Q 10/06, G06Q 50/12

(54) **DETERMINING ROOM SERVICE TIMES BASED ON LOCK AUDIT RECORDS**

(30) Priority: 26.03.2018 IN 201811011029
(71) Applicant: Carrier Corporation, Palm Beach Gardens, FL 33418 (US)
(72) Inventor: SANTHOSH, Amuduri, 500 081 Hyderabad, Telangana (IN); MAQSOOD, Mohammed, 500 081 Hyderabad, Telangana (IN)
(74) Representative: Dehns

(57) **Abstract**

A method of determining room service times based on lock audit records is provided. The method includes receiving, at a processor, lock audit records for an access control device 16. The lock audit records store timestamps of detected occurrences of a lock state of the access control device 16 changing during a period of stay of a hotel guest assigned to a room operably coupled to the access control device. Analytics are performed based at least in part on the lock audit records to predict a time that the hotel guest will not be in the room. A room service time is determined for the room based at least in part on the predicted time that the hotel guest will not be in the room. A notification that includes the determined room service time is transmitted to a mobile device 12 of the hotel guest.

## Description

The subject matter disclosed herein generally relates to the field of access control systems, and more particularly to an apparatus and method for determining room service times based on access control system audit records.

Hotels typically schedule housekeeping and other room service tasks based on the location of rooms and without taking into account whether a hotel guest is likely to be in a room schedule for service. Often, room service is scheduled for all of the rooms at a specific time such as during morning hours. In order to communicate that they do not want room service at that moment, hotel guests can put up a "do not disturb" sign to prevent a hotel employee from knocking on or opening the door to their rooms. This requires each hotel guest to have to remember to put up the sign when they do not want to be disturbed, and to take the sign down to signal to the hotel employees that room service can be performed. Housekeeping services for a room can be skipped for an entire day or more because the hotel guest forgot to remove the do not disturb sign or because the housekeeping crew has forgotten to come back to the skipped room to check to see if the hotel guest has removed the do not disturb sign.

According to a first aspect of the invention, a method of determining room service times based on lock audit records is provided. The method includes receiving, at a processor, lock audit records for an access control device. The lock audit records store timestamps of detected occurrences of a lock state of the access control device changing during a period of stay of a hotel guest assigned to a room operably coupled to the access control device. Analytics are performed based at least in part on the lock audit records to predict a time that the hotel guest will not be in the room. A room service time is determined for the room based at least in part on the predicted time that the hotel guest will not be in the room. A notification that includes the determined room service time is transmitted to a mobile device of the hotel guest.

Optionally, the method may include receiving, at the processor, data that includes a timestamp of a detected occurrence of the mobile device of the hotel guest in or proximate to an elevator during the period of stay of the hotel guest, and the analytics are further performed based at least in part on the received data.

Optionally, the method may include receiving, at the processor, data that includes a timestamp of a detected occurrence of the mobile device of the hotel guest proximate to a beacon during the period of stay of the hotel guest, and the analytics are further performed based at least in part on the received data.

Optionally, the method may include receiving, at the processor, data that includes a detected occurrence of lights in the room being turned on or off during the period of stay of the hotel guest, and the analytics are further performed based at least in part on the received data.

Optionally, the method may include a service charge being calculated for the hotel guest based at least in part on an amount of time during the period of stay that the lights in the room were turned on. The amount of time is determined based at least in part on the received data.

Optionally, the method may include the access control device being communicatively coupled to the processor via a communication interface, and the lock audit records being received directly from the access control device via the communication interface.

Optionally, the method may include the access control device not being communicatively coupled to the processor, and the lock audit records are received from a manual lock data reader that retrieved the lock audit records from the access control device.

Optionally, the method may include transmitting a notification directing an employee to perform the room service at the determined room service time.

Optionally, the method may include determining when to service the access control device based at least in part on the lock audit records.

Optionally, the method may include receiving, at the processor, second lock audit data for a second access control device that controls access to an automated guest service device, and determining when to service the automated guest service device based at least in part on the second lock audit data.

Optionally, the method may include receiving, at the processor, data that includes a current location of the hotel guest, and the analytics are further performed based at least in part on the received data.

According to another aspect of the invention, a system is configured to determine room service times based on lock audit records. The system includes a processor and a memory having computer-executable instructions that, when executed by the processor, cause the processor to perform operation. The operations include receiving, at a processor, lock audit records for an access control device. The lock audit records store timestamps of detected occurrences of a lock state of the access control device changing during a period of stay of a hotel guest assigned to a room operably coupled to the access control device. Analytics are performed based at least in part on the lock audit records to predict a time that the hotel guest will not be in the room. A room service time is determined for the room based at least in part on the predicted time that the hotel guest will not be in the room. A notification that includes the determined room service time is transmitted to a mobile device of the hotel guest.

The system may include receiving data that includes a timestamp of a detected occurrence of the mobile device of the hotel guest in or proximate to an elevator during the period of stay of the hotel guest, and the analytics are further performed based at least in part on the received data.

The system may include receiving data that includes a timestamp of a detected occurrence of the mobile device of the hotel guest proximate to a beacon during the period of stay of the hotel guest, and the analytics are further performed based at least in part on the received data.

The system may include receiving data that includes a detected occurrence of lights in the room being turned on or off during the period of stay of the hotel guest, and the analytics are further performed based at least in part on the received data.

The system may include a service charge being calculated for the hotel guest based at least in part on an amount of time during the period of stay that the lights in the room were turned on. The amount of time is determined based at least in part on the received data.

The system may include the access control device being communicatively coupled to the processor via a communication interface, and the lock audit records being received directly from the access control device via the communication interface.

The system may include the access control device not being communicatively coupled to the processor, and the lock audit records are received from a manual lock data reader that retrieved the lock audit records from the access control device.

The system may include transmitting a notification directing an employee to perform the room service at the determined room service time.

The system may include determining when to service the access control device based at least in part on the lock audit records.

The system may include receiving second lock audit data for a second access control device that controls access to an automated guest service device, and determining when to service the automated guest service device based at least in part on the second lock audit data.

The system may include receiving data that includes a current location of the hotel guest, and the analytics are further performed based at least in part on the received data.

Technical effects of at least the preferred embodiments of the present disclosure include the ability to predict when a room will be vacant based on lock audit records and to use the prediction to schedule room service times.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The following descriptions should not be considered limiting in any way. With reference to the accompanying drawings, like elements are numbered alike:
FIG. 1 illustrates a general schematic system diagram of an access control system;
FIG. 2 illustrates a block diagram of an access control device, mobile device and server of the access control system of FIG. 1; and
FIG. 3 is a flow diagram illustrating a method of determining room service times based on access control system audit records.

A detailed description of one or more embodiments of the disclosed apparatus and method are presented herein by way of exemplification and not limitation with reference to the Figures.

In accordance with an embodiment, analytics are used on lock audit records to determine room service times. Existing access control devices, such as locks, may allow a person to unlock a hotel room via a key card and/or a mobile device. Data recording each time that a lock state of an access control device changes state from locked to unlocked or from unlocked to locked may be stored as lock audit records. For online locks that are connected to a hotel server via a network, the lock audit records can be transmitted directly from the access control device to the hotel server. For offline locks that are not connected to a network, a hotel technician can see the lock audit records by using a lock diagnostic device that can read the lock audit records. If the lock is offline, hotel technicians can use the lock diagnostic device to download the lock audit records from the offline lock manually and then upload the lock audit records to a processor such as a hotel server.

The analytics described herein use the lock audit records to determine the past behavior of a hotel guest and then use the past behavior of the hotel guest to predict when a room assigned to the hotel guest is likely to be unoccupied. Room service can be scheduled for the hotel guest's room during a time when it is likely to be unoccupied. The scheduled room service time can be transmitted to a mobile device of the guest as well as hotel employee so that the guest is aware of when the scheduled room service will occur.

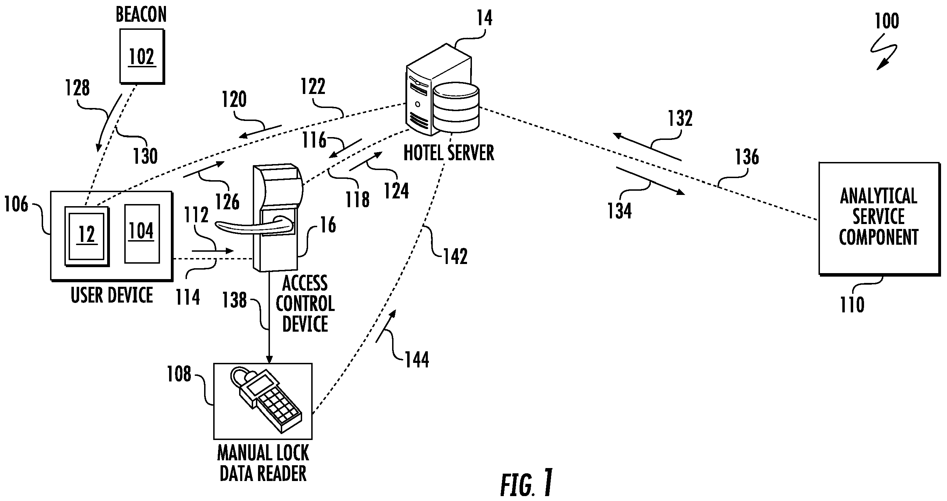

Turning now to FIG. 1, a general schematic system diagram of an access control system 100 is generally shown. The system 100 generally includes a user device 106, an access control device 16, a server 14, a manual lock data reader 108, an analytical service component 110, and a beacon 102. It should be appreciated that while one access control device 16 is illustrated, the access control system 100 may include any number of access control devices 16. In addition, though one beacon 102 is shown, the access control system 100 may include any number of beacons 102. It should be appreciated that, although particular systems are separately defined in the schematic block diagrams, each or any of the systems may be otherwise combined or separated via hardware and/or software. For example, computer instructions to implement the analytical service component 110 can be located on and executed by the server 14.

In an embodiment, the access control device 16 includes a lock and controls access through a door. It should be appreciated that the access control system 100 may include any number of doors and rooms. Further, there may be multiple doors and access control devices 16 for each room.

For a selected period of time (e.g., a period of stay of a hotel guest at a hotel) the user device 106 associated with a hotel guest may be granted access to one or more access control devices 16 (e.g., the door lock on a hotel room assigned to the hotel guest). When a person checks in to the hotel, their user device 106 is granted access to a room. There may be one or more user devices 106 assigned to a hotel room (e.g., one for each occupant of the room), thus embodiments disclosed herein may apply to multiple user devices 106 per room. A hotel guest uses the user device 106 to unlock and/or lock the access control device 16 operably connected to their assigned room. The state of the access control device 16 can be changed from locked to unlocked through an access request 112 from the user device 106 being sent to the access control device 16 via a short-range wireless communication interface 114. In an alternate embodiment (not shown) a near field communication interface (NFC) is used instead of or in addition to the short-range wireless communication interface 114. The short-range wireless communication interface 114 can be implemented by any short-range wireless communication method known in the art such as, but not limited to: Wi-Fi, Bluetooth, Zigbee, and infrared. In an embodiment, the user device 106 is a physical RFID card that stores a state of the lock that is determined based on the access card being swiped on the access control device 16.

The user device 106 may store credentials to unlock and/or lock the access control device 16. Some credentials may be used for multiple access control devices 16 if there are multiple access control devices 16 for a single assigned room or the hotel guest is assigned access to multiple rooms. For example, an access control device 16 operably connected to a hotel room and an access control device 16 operably connected to a hotel pool may respond to the same credential. Other credentials may be specific to a single access control device 16.

The user device 106 may be a physical key card 104 and/or a mobile device 12. The user device 106 may transmit an access request 112 to the access control device 16 via the short-range radio transmission interface 114 when the user device 106 is placed proximate to (i.e., within the range of the short-range radio transmission interface) the access control device 16. Alternatively, when the user device 106 is a key card 104, an access request 112 can be transmitted to the access control device 16 by the user device 106 being inserted into the access control device 16 for the access control device 16 to read the key card 104 (e.g., an encoded magnetic stripe). The physical key card 104 is capable of being encoded with card data, such as, for example, a magnetic stripe or RFID chip. The data may include credentials to grant access to a specific access control device 16. For example, for a period of stay of the hotel guest, the user device 106 may be granted access to a specific access control device 16. In an embodiment, the data includes audit data that is retrieved from the RFID card once a hotel guest leaves the hotel room or an exit gate, and based on the audit data the analytics can determine the hotel guest presence. In an embodiment, the mobile device 12 is a wireless capable handheld device such as a smartphone that is operable to communicate with the server 14 via a wireless communication interface 122. The wireless communication interface 122 may be implemented by any short or long-range wireless communication method known in the art over networks such as, but not limited to the Internet, a local area network (LAN), and a wide area network (WAN). Although the server 14 is depicted herein as a single device, it should be appreciated that the server 14 may alternatively be embodied as a multiplicity of systems, from which the mobile device 12 receives credentials and other data 120 via communication interface 122.

In addition, the server 14 may provide credentials and other data such as firmware or software updates 116 to the access control device 16 via communication interface 118. The communication interface 118 may be implemented by any short or long-range wireless communication method known in the art over networks such as, but not limited to the Internet, a local area network (LAN), and a wide area network (WAN). In addition, the communication interface 118 can be wired or wireless.

The access control device 16 may be a wireless-capable, restricted-access, or restricted-use device such as a wireless lock, access control reader for building entry, and other restricted-use machine. The user device 106 submits credentials to the access control device 16, thereby selectively permitting a user to access or activate functions of the access control device 16. A user device 106 may, for example, submit a credential to an electromechanical lock to unlock it, and thereby gain access to a room at the hotel.

In an embodiment, the access control device 16 is configured to generate lock audit data to record each time that a lock is locked (or closed) and each time that the lock is unlocked (or opened). In an embodiment, each record in the lock audit data includes a timestamp, an indicator of a state of locked or unlocked, and an identifier of a location (e.g., room number) of the access control device 16. When a lock audit record indicates that the lock was unlocked, the audit data for the record can also include an identifier of the user device 106 sending the access request 112. This additional information can be used to distinguish between accesses by the hotel guest and accesses by hotel employees. In an embodiment, the lock audit records 124 are transmitted from the access control device 16 to the server 14 via communication interface 118. The lock audit records 124 may also be transmitted from the access control device 16 to the server 14 via the user device 106 and communication interface 122. In an embodiment, the lock audit records 124 are transmitted periodically at a selected interval.

In the case where the access control device 16 is offline and not in communication with the server 14 via communication interface 118, a manual lock data reader 108 is used to extract the lock audit records 138 from the access control device 16. The extracted lock audit records 144 are transmitted to the server 14 via communication interface 142. The lock audit records 124 may also be transmitted to the server 14 via the user device 106 and communication interface 122. In an embodiment, the manual lock data reader 108 is implemented by an Exportable Portable Programmer (XPP) from United Technologies Corporation. Communication interface 142 may be implemented by any short or long-range wireless communication method known in the art over networks such as, but not limited to the Internet, a local area network (LAN), and a wide area network (WAN). In addition, the communication interface 142 can be wired or wireless.

In an embodiment, the mobile device 12 of the hotel guest receives a notification when it is in proximity of a beacon 102. The mobile device 12 is proximate to the beacon 102 when it is within a transmission range of a signal emitted from the beacon 102. The beacon 102 can be located anywhere on the hotel property such as, but not limited to: in an elevator, in a hallway, and in a hotel room. The beacon 102 can advertise its presence to the mobile device 12 via a short range wireless communication interface 130 such as, but not limited to Wi-Fi, Bluetooth, Zigbee, infrared, or any other short-range wireless communication method known to one of skill in the art. In an embodiment, the short-range wireless communication interface 130 is Bluetooth Low Energy (BTLE). In an embodiment data 128 sent from the beacon 102 to the mobile device 12 includes a timestamp of the current time and an identifier of the location of the beacon 102. In an embodiment, the mobile device 12 adds an identifier of the mobile device 12 to the data 128 it receives from the beacon 102 to create a beacon audit record 126, and transmits the beacon audit record 126 to the server 14 via communication interface 122.

As shown in FIG. 1, the server 14 transmits lock audit records 134 to the analytical service component 110 via communication interface 136. Communication interface 136 may be implemented by any short or long-range wireless communication method known in the art over networks such as, but not limited to the Internet, a local area network (LAN), and a wide area network (WAN). In addition, the communication interface 136 can be wired or wireless. The analytical service component 110 performs analysis on the lock audit records 134 to create a profile 132 of the hotel guest that indicates expected times for a room assigned to the hotel guest(s) to be unoccupied by the hotel guest(s). Based on the profile 132, the server 14 schedules a time to perform room service in the room assigned to the hotel guest. In an embodiment, an alert with the scheduled time 120 is transmitted to the mobile device 12 of the hotel guest assigned to the hotel room. The alert may be audible, vibratory, and/or visual.

In an embodiment, the analytical server component 110 is an application that is executing on the server 14. In another, embodiment the analytical server component 110 is executing on the mobile device. In another embodiment, the analytical server component 100 is executing on a processor remote from the server 14 and the communication interface 136 is a wireless network.

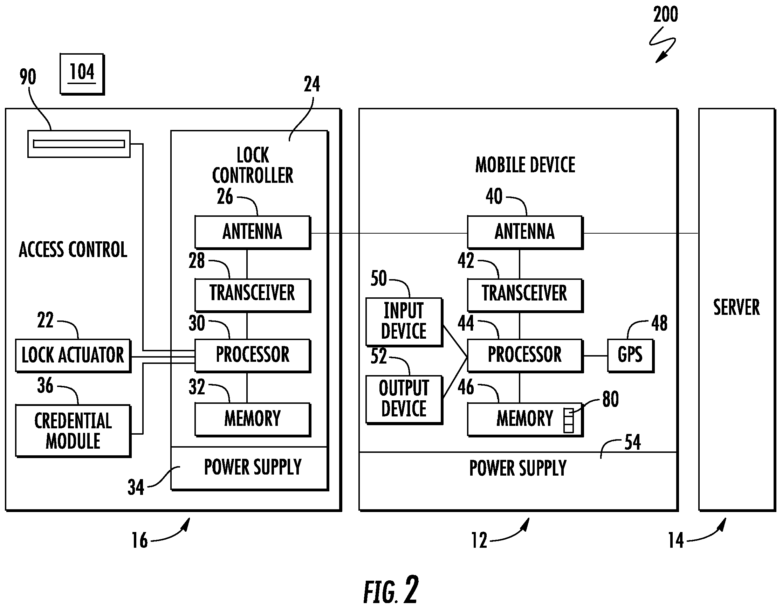

With reference to FIG. 2, a block diagram of an example electronic lock system 200 includes the access control device 16, the mobile device 12 of the hotel guest, and the server 14. The access control device 16 generally includes a lock actuator 22, a lock controller 24, a lock antenna 26, a lock transceiver 28, a lock processor 30, a lock memory 32, a lock power supply 34, a lock card reader 90 and a credential module 36. The access control device 16 may have essentially two readers, one reader 90 to read a physical key card 104 and the credential module 36 to communicate with the mobile device 12 via the lock processor 30 and the transceiver 28 and antenna 26. The access control device 16 is responsive to credentials from the mobile device 12, and may, for example, be the lock of a turnstile or a door lock. Although the present disclosure focuses primarily on credentials for access control, it should be appreciated that other systems wherein credentials are transmitted from a mobile device to an access control device so as to identify the user to an online system or validate user access rights or permissions in an offline system will benefit herefrom.

Upon receiving and authenticating an appropriate credential from the mobile device 12 using the credential module 36, or after receiving card data from lock card reader 90, the lock controller 24 commands the lock actuator 22 to lock or unlock a mechanical or electronic lock. In this manner, a lock state of the access control device 16 changes from one state to another state. The lock controller 24 and the lock actuator 22 may be parts of a single electronic or electromechanical lock unit, or may be components sold or installed separately.

The lock transceiver 28 is capable of transmitting and receiving data to and from at least the mobile device 12. The lock transceiver 28 may, for instance, be a near field communication (NFC), Bluetooth, infrared, Zigbee, or Wi-Fi transceiver, or another appropriate wireless transceiver. The lock antenna 26 is any antenna appropriate to the lock transceiver 28. The lock processor 30 and lock memory 32 are, respectively, data processing, and storage devices. The lock processor 30 may, for instance, be a microprocessor that can process instructions to validate credentials and determine the access rights contained in the credentials or to pass messages from a transceiver to a credential module 36 and to receive a response indication back from the credential module 36. The lock memory 32 may be RAM, EEPROM, or other storage medium where the lock processor 30 can read and write data including but not limited to lock configuration options and the lock audit records. The lock audit records described herein may be a unified audit trail that includes events initiated by accessing the lock via a mobile device 12 or key card 104. The lock power supply 34 is a power source such as line power connection, a power scavenging system, or a battery that powers the lock controller 24. In other embodiments, the lock power supply 34 may only power the lock controller 24, with the lock actuator 22 powered primarily or entirely by another source, such as user work (e.g. turning a bolt).

While FIG. 2 shows the lock antenna 26 and the transceiver 28 connected to the processor 30, this is not to limit other embodiments that may have additional antenna 26 and transceiver 28 connected to the credential module 36 directly. The credential module 36 may contain a transceiver 28 and antenna 26 as part of the credential module. Or the credential module 36 may have a transceiver 28 and antenna 26 separately from the processor 30 which also has a separate transceiver 28 and antenna 26 of the same type or different. In some embodiments, the processor 30 may route communication received via transceiver 28 to the credential module 36. In other embodiments the credential module may communicate directly to the mobile device 12 through the transceiver 28.

The mobile device 12 generally includes a key antenna 40, a key transceiver 42, a key processor 44, a key memory 46, a GPS receiver 48, an input device 50, an output device 52, and a key power supply 54. The key transceiver 42 is a transceiver of a type corresponding to the lock transceiver 28, and the key antenna 40 is a corresponding antenna 26. In some embodiments, the key transceiver 42 and the key antenna 40 may also be used to communicate with the server 14. In other embodiments, one or more separate transceivers and antennas may be included to communicate with server 14. The key memory 46 is of a type to store a plurality of credentials locally on the mobile device 12. The mobile device 12 may also include a mobile device application 80. Embodiments disclosed herein, may operate through the mobile device application 80 installed on the mobile device 12.

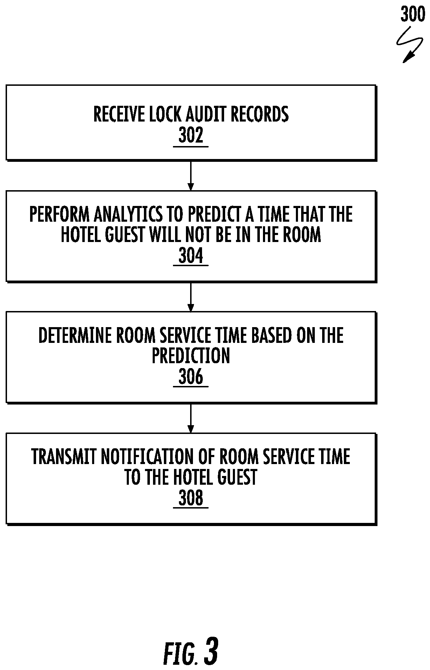

Turning now to FIG. 3, a flow diagram 300 illustrating a method of determining room service times based on access control system audit records is generally shown. At block 302, lock audit records are received by a server, such as hotel server 14. The lock audit records can be received by the server from an access control device, such as access control device 16, via a communication interface, such as communication interface 118 when the access control device is in an online state. Alternatively, or in addition, the lock audit records can be received by the server from a manual lock data recorder, such as manual lock data recorder 108, when the access control device is offline. The lock audit data includes records that indicate when the access control device was locked and when the access control device was unlocked during a period of stay of a hotel guest assigned to a room operably coupled to the access control device. In an embodiment, the lock audit records store timestamps of detected occurrences of a lock state of the access control device changing from one state to another state during the period of stay of the hotel guest assigned to the room that contains the access control device.

At block 304, analytics are performed based at least in part on the lock audit records to predict a time(s) that the hotel guest(s) will not be in the room containing the access control device. In an embodiment, the analytics are performed by analytic service component 110. In an embodiment, the lock audit data indicates whether the access control device was unlocked using a user device, such as user device 106, which can indicate that the hotel guest was entering the room. In an embodiment, the lock audit records can also indicate whether the access control device was unlocked without using a user device, which can indicate that the hotel guest was leaving the room. Additional data can be input to the analytic service component 110 such as a time that a mobile device of the hotel guest was located at a geographical location proximate to or in an elevator. The analytics can use this additional information along with or in place of how the access control was unlocked (e.g., key or no key) to make a prediction. For example, the analytics can use a lock state event followed by the hotel guest being located (e.g., via a beacon such as beacon 102 of FIG. 1) at a common door in the hotel such as a reception door, an exit gate, or a parking gate to indicate the presence or absence of the guest at the hotel. In another example, a state change from lock to unlock followed by the hotel guest being spotted in or proximate to the elevator can indicate that the hotel guest was leaving the room. Similarly, the hotel guest being spotted in or proximate to the elevator followed by a lock state changing from locked to unlocked can indicate that the hotel guest is entering the room. Data about the mobile device of the hotel guest being near any beacons at locations both inside and outside of the room can also be utilized by the analytics to aid in predicting times that the hotel guest will be outside of the room assigned to the hotel guest.

In an embodiment, sensor data can also be input to the analytics. For example data from smart lights can be utilized by the analytics. In an embodiment, when the light are turned on it can indicate that hotel guest is in the room. Sensor data indicating that the lights were turned off at a particular time could be combined by the analytics to determine whether the hotel guest was out of the room or asleep.

In an embodiment, a service charge is calculated for the hotel guest based at least in part on an amount of time during the period of stay that the lights in the room were turned on. In an embodiment, a service charge is calculated for the hotel guest based on an amount of time that the hotel guest spends in the room. In an embodiment, a service charge is calculated for the hotel guest based on the number of times that the hotel guest uses the elevator, or other service. In addition, a determination can be made about when to service the lights (e.g., change the light bulbs) based on a cumulative amount of time that the lights are turned on.

The analytics determines the past patterns of the hotel guest and uses them to predict a future pattern of the hotel guest. The analytics can also take into account patterns from previous stays by the hotel guest at the hotel, and days of the week in predicting a future pattern. The output of the analytics is a prediction of when the room that the hotel guest is staying at will be occupied and when it will be unoccupied. The prediction can be accompanied by a confidence level that the prediction is correct. In an embodiment, data about an actual current location of the hotel guest can be utilized by the analytics to verify the prediction and/or to train the analytics. In an embodiment, the geo-fence coordinates of the hotel guest's mobile device or wearable device such as a smart watch are utilized by the analytics.

Turning now to block 306 of FIG. 3, a room service time is determined for the room based at least in part on the predicted time(s) that the hotel guest will not be in the room. At block 308, a notification indicating the determined room service time is transmitted to the mobile device of the hotel guest. In addition, a notification can also be transmitted to an employee directing them to perform the room service at the determined time. Further, a notification can also be sent to the employee about scheduled room service per day for each of a group of rooms.

In an embodiment, lock audit data is received for an access control device of an automated guest service device, such as a shoe shine machine or a printer. The lock audit data from the automated guest service device can be used to determine (e.g., based on frequency of use) when to replenish the supplies for the hotel service. For a shoe shine machine, new shoe polish is replenished after some number of uses and for a printer, paper may need to be added or a new print cartridge installed. In addition, hotel guests can be charged for using this common equipment based on their usage. Similarly, a frequency of locks and unlocks, calculated based on the lock audit data can be used to determine when to service an access control device (e.g., battery replacement) of the automated guest service device. In an embodiment, the access control device is a hotel safe used by a guest, and service times for the hotel safe can be determined based on safe access events. In an embodiment, safe audit events are sent to the room lock using a Bluetooth interface, or from a lock on the safe to a mobile device. In an embodiment, the access control device controls access to food items and service times to replenish the food items are determined based on lock audit data.

In an embodiment, it can be determined that X% of the hotel guests use the fitness center, while Y% of the guests use the pool. Or that guests on the first floor tend to open their doors more often so the access control device on their doors needs to be serviced more often based on usage. In an embodiment, service notifications can be sent to the hotel guest in combination with lock audit information to inform the hotel guest that room service is in progress.

While the above description has described the flow process of FIG. 3 in a particular order, it should be appreciated that unless otherwise specifically required in the attached claims that the ordering of the steps may be varied.

While embodiments have been described herein in terms of a hotel, it will be appreciated that embodiments can be utilized in any environment where people regularly occupy defined locations that may require services such as, but not limited to office spaces or campus dormitories.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention, as defined by the claims. In addition, many modifications may be made to adapt a particular situation or material to the teachings of the present disclosure without departing from the scope of the invention, as defined by the claims. Therefore, it is intended that the present invention not be limited to the particular embodiment disclosed as the best mode contemplated for carrying out this present invention, but that the present invention will include all embodiments falling within the scope of the claims.

## Claims

1. A method of determining room service times based on lock audit records, the method comprising:
receiving, at a processor, lock audit records (124) for an access control device (16), the lock audit records storing timestamps of detected occurrences of a lock state of the access control device changing during a period of stay of a hotel guest assigned to a room operably coupled to the access control device, the lock state selected from the group consisting of locked and unlocked;
performing analytics based at least in part on the lock audit records to predict a time that the hotel guest will not be in the room;
determining a room service time for the room based at least in part on the predicted time that the hotel guest will not be in the room; and
transmitting a notification of the determined room service time to a mobile device (12) of the hotel guest.

2. The method of claim 1, further comprising receiving, at the processor, data that includes a timestamp of a detected occurrence of the mobile device (12) of the hotel guest in or proximate to an elevator and/or proximate to a beacon (102) during the period of stay of the hotel guest, wherein the performing analytics is further based at least in part on the received data.

3. The method of claim 1 or 2, further comprising receiving, at the processor, data that includes a detected occurrence of lights in the room being turned on or off during the period of stay of the hotel guest, wherein the performing analytics is further based at least in part on the received data.

4. The method of claim 3, wherein a service charge is calculated for the hotel guest based at least in part on an amount of time during the period of stay that the lights in the room were turned on, the amount of time determined based at least in part on the received data.

5. The method of any preceding claim, wherein the access control device (16) is communicatively coupled to the processor via a communication interface (122), and the lock audit records (124) are received directly from the access control device via the communication interface.

6. The method of any preceding claim, wherein the access control device (16) is not communicatively coupled to the processor, and the lock audit records (124) are received from a manual lock data reader (108) that retrieved the lock audit records from the access control device.

7. The method of any preceding claim, further comprising transmitting a notification directing an employee to perform the room service at the determined room service time.

8. The method of any preceding claim, further comprising determining when to service the access control device (16) based at least in part on the lock audit records.

9. The method of any preceding claim, further comprising:
receiving, at the processor, second lock audit data for a second access control device that controls access to an automated guest service device; and
determining when to service the automated guest service device based at least in part on the second lock audit data.

10. The method of any preceding claim, further comprising receiving, at the processor, data that includes a current location of the hotel guest, wherein the performing analytics is further based at least in part on the received data.

11. A system configured to determining room service times based on lock audit records, the system comprising:
a processor; and
a memory comprising computer-executable instructions that, when executed by the processor, cause the processor to perform operations, the operations comprising:
receiving lock audit records (124) for an access control device (16), the lock audit records storing timestamps of detected occurrences of a lock state of the access control device changing during a period of stay of a hotel guest assigned to a room operably coupled to the access control device, the lock state selected from the group consisting of locked and unlocked;
performing analytics based at least in part on the lock audit records to predict a time that the hotel guest will not be in the room;
determining a room service time for the room based at least in part on the predicted time that the hotel guest will not be in the room; and
transmitting a notification of the determined room service time to a mobile device (12) of the hotel guest.

12. The system of claim 11, wherein the operations further comprise receiving data that includes a timestamp of a detected occurrence of the mobile device (12) of the hotel guest in or proximate to an elevator and/or proximate to a beacon (102) during the period of stay of the hotel guest, wherein the performing analytics is further based at least in part on the received data.

13. The system of claim 11 or 12, wherein the operations further comprise receiving data that includes a detected occurrence of lights in the room being turned on or off during the period of stay of the hotel guest, wherein the performing analytics is further based at least in part on the received data.

14. The system of claim 11, 12 or 13, wherein the access control device (16) is communicatively coupled to the processor via a communication interface (122), and the lock audit records (124) are received directly from the access control device (16) via the communication interface; or wherein the access control device (16) is not communicatively coupled to the processor and the lock audit records (124) are received from a manual lock data reader (108) that retrieved the lock audit records from the access control device (16).

15. The system of any of claims 11 to 14, wherein the operations further comprise transmitting a notification directing an employee to perform the room service at the determined room service time; and/or
receiving second lock audit data for a second access control device that controls access to an automated guest service device, and
determining when to service the automated guest service device based at least in part on the second lock audit data; and/or
receiving data that includes a current location of the hotel guest, wherein the performing analytics is further based at least in part on the received data.
